# EUROPÄISCHE PATENTANMELDUNG

(11) **EP 4 674 601 A1**
(43) Veröffentlichungstag der Anmeldung: **07.01.2026**
(21) Anmeldenummer: 25179749.4
(22) Anmeldetag: 29.05.2025
(51) Int. Cl.: B29C 65/20, B29C 65/78, B29L 31/00

(54) **VERFAHREN ZUM VERSCHWEISSEN VON KUNSTSTOFFPROFILSTÄBEN**

(30) Priorität: 28.06.2024 DE 102024118367
(71) Anmelder: Urban GmbH & Co. Maschinenbau KG, 87700 Memmingen (DE)
(72) Erfinder: Geisler, Kenny, 87700 Memmingen (DE)
(74) Vertreter: Patentanwälte Olbricht, Buchhold, Keulertz Partnerschaft mbB

(57) **Zusammenfassung**

Vorgeschlagen wird ein Verfahren zum Verschweißen von vier Kunststoffprofilstäben (PÜ1, PÜ2, PA1, PA2) zu einem Rahmen (2) mit sichtflächigen Stumpfstößen (4) unter Verwendung einer Maschine (1) mit vier Schweißköpfen (K1, K2, K3, K4), wobei eine Verstellung (S7) zumindest eines Schweißkopfes (K1, K2, K3, K4) auf Basis zumindest eines zuvor ermittelten (S4, S5) Längenwertes erfolgt.

## Beschreibung

Die Erfindung betrifft ein Verfahren zum Verschweißen von Kunststoffprofilstäben gemäß Anspruch 1.

Es sind aus Kunststoffprofilstäben hergestellte Rahmen bekannt. Vor deren Verschweißung weisen die Kunststoffprofilstäbe endseitige Gehrungsflächen auf. Daher zeigt sich sichtseitig am Rahmen dann auch eine entsprechend verlaufende Schweißnaht. Diese Schweißnaht ist üblicherweise um 45° zur Längsachse des entsprechenden Kunststoffprofilstabs verkippt. Mitunter soll der Rahmen aus Kunststoffprofilstäben jedoch einen Rahmen aus Holzstäben imitieren, beispielsweise für Fenster als Holzfenster-Look (HFL) bezeichnet. Die sichtflächigen Stumpfstöße von Holzfenstern verlaufen üblicherweise in Längsrichtung zumindest eines der Holzstäbe, sie stoßen also stumpf aufeinander. Die Sichtfläche derartiger Rahmen setzt sich daher aus rechtwinkligen Flächen zusammen.

Um dieses Aussehen zu imitieren, können zwei der vier Kunststoffprofilstäbe endseitige Überschläge und die beiden anderen Kunststoffprofilstäbe endseitige Ausklinkungen aufweisen. Am gefertigten Rahmen greifen die Überschläge formpassend in die Ausklinkungen ein. Unterhalb der Überschläge werden die Kunststoffprofilstäbe noch immer über endseitige Gehrungsflächen verschweißt.

Problematisch an derartigen Rahmen ist jedoch, dass die Überschläge und die Ausklinkungen exakt formpassend sein müssen, um nach einem Zuschneiden der Kunststoffprofilstäbe beispielsweise eine materialentfernende Nacharbeit an den Überschlägen und die Ausklinkungen zu vermeiden. Zudem kann eine materialentfernende Nacharbeit an den Überschlägen und Ausklinkungen sehr aufwändig oder gar unmöglich sein, denn diese müssen sich zwingend formpassend ineinanderfügen. Wenn das Zuschneiden nicht exakt ausgeführt wird, kann es zwischen den Überschlägen und Ausklinkungen zu Lücken kommen, die wenig ästhetisch sind und unerwünschte Schmutzstellen ausbilden. Wenn das Zuschneiden nicht exakt ausgeführt wird, kann es im gefertigten Rahmen zu Spannungen kommen, wenn die Kunststoffprofilstäbe trotz Übermaße auf ein Rahmen-SOLL-Maß verschweißt werden.

Der Aufwand, der bislang betrieben werden muss, um diese exakte Maßgenauigkeit bei annähernder Nulltoleranz herzustellen, bedarf erheblicher Ressourcen und verursacht ebenso nennenswerten Materialausschuss.

Aufgabe der Erfindung ist daher die entsprechende Verbesserung des Stands der Technik.

Die Erfindung löst diese Aufgabe mit den Merkmalen des Anspruchs 1. Ausgestaltungen sind Gegenstand der abhängigen Ansprüche.

Erfindungsgemäß wird ein Verfahren zum Verschweißen von vier Kunststoffprofilstäben zu einem Rahmen mit sichtflächigen Stumpfstößen unter Verwendung einer Maschine mit vier Schweißköpfen vorgeschlagen, umfassend die folgenden Schritte:
- Einlegen eines ersten Paars von Kunststoffprofilstäben in die Maschine, wobei in der Maschine jeder Kunststoffprofilstab des ersten Paars endseitige Gehrungsflächen und endseitige Überschläge aufweist, wobei jeder Überschlag eine endseitige Überschlagstirnseite und eine Überschlaglängsseite aufweist,
- Einlegen eines zweiten Paars von Kunststoffprofilstäben in die Maschine, wobei in der Maschine jeder Kunststoffprofilstab des zweiten Paars endseitige Gehrungsflächen und endseitige Ausklinkungen aufweist, wobei jeder Kunststoffprofilstab des zweiten Paars eine Außenumfangsseite und eine Ausklinkungsstirnseite aufweist,
- Ermitteln zumindest eines ersten Längenwertes anhand der Kunststoffprofilstäbe,
- Ermitteln zumindest eines zweiten Längenwertes anhand der Kunststoffprofilstäbe,
- Verstellen zumindest eines Schweißkopfes der vier Schweißköpfe auf Basis des zumindest einen ersten Längenwertes und des zumindest einen zweiten Längenwertes,
- Erhitzen der Gehrungsflächen,
- Gegeneinanderdrücken der Gehrungsflächen.

Das erfindungsgemäße Verfahren ermöglicht nun ein sicheres Verschweißen von Kunststoffprofilstäben zu einem Rahmen mit exakter Passung, selbst wenn ein zuvor erfolgtes Zuschneiden der Kunststoffprofilstäbe toleranzbehaftet ist oder in großen Toleranzbereichen erfolgt. Mit dem erfindungsgemäßen Verfahren sind daher sowohl untermaßverursachte Lücken auf der Sichtseite oder Hauptfläche wie auch übermaßverursachte Spannungen im Rahmen vermieden. Bisherig notwendige Probeschweißungen oder Nachfräsungen an Überschlägen und/oder Ausklinkungen zur Anpassung an ein SOLL-Maß sind daher ebenso vermieden wie die Notwendigkeit des zuvor erfolgten Zuschneidens mit sehr geringen Toleranzen.

Der Erfindung liegt die Erkenntnis zugrunde, dass die Verschweißung der Kunststoffprofilstäbe nicht von einem SOLL-Maß des zu fertigenden Rahmens abhängen muss, sondern von den IST-Maßen der Überschläge und Ausklinkungen festgelegt werden kann. Die Überschläge und Ausklinkungen bleiben maßlich unverändert, sobald die Kunststoffprofilstäbe in die Maschine eingelegt werden. Die Überschläge und Ausklinkungen sind maßlich unveränderliche Abschnitte der Kunststoffprofilstäbe und stellen die IST-Maße dar. Diese IST-Maße spiegeln sich in den ermittelten Längenwerte wider und geben die Verschweißung der Kunststoffprofilstäbe vor.

Das Verfahren wird unter Verwendung einer Maschine mit vier Schweißköpfen ausgeführt. Sie kann daher als 4-Kopf-Schweißmaschine bezeichnet werden. Diese Maschine kann wie nachfolgend beschrieben konfiguriert sein, auch nur in Teilen. Zur räumlichen Nachvollziehbarkeit wird ein kartesisches Koordinatensystem angenommen, wobei die Richtungen X und Y eine horizontale Ebene aufspannen und die Richtung Z rechtwinklig abragt. Jeder der vier Schweißköpfe kann beweglich sein und verfahren werden, zumindest in X- und/oder Y-Richtung.

Es ist eine Ausführung denkbar, in der einer der vier Schweißköpfe (z.B. ein dritter Schweißkopf) ortsfest ist und sich die anderen drei Schweißköpfe dem ortsfesten Schweißkopf annähern oder sich davon entfernen können. Beispielsweise kann einer der drei beweglichen Schweißköpfe (z.B. ein erster Schweißkopf) in Y-Richtung verstellbar sein. Beispielsweise kann ein weiterer der drei beweglichen Schweißköpfe (z.B. ein zweiter Schweißkopf) in X-Richtung und Y-Richtung verstellbar sein. Beispielsweise kann ein weiterer der drei beweglichen Schweißköpfe (z.B. ein vierter Schweißkopf) in X-Richtung verstellbar sein. Jeder Schweißkopf kann zwei Auflageplatten tragen.

Auf den Auflageplatten können die Kunststoffprofilstäbe aufgelegt werden. Die Auflageplatten können bei Bewegung des jeweiligen Schweißkopfes entsprechend mitverstellbar sein. Hierbei sind sie in relativer Ruhe zum jeweiligen Schweißkopf. Die Auflageplatten können jedoch zusätzlich gegenüber dem jeweiligen Schweißkopf beweglich sein, zumindest in X- und/oder Y-Richtung. Beispielsweise ist eine der beiden Auflageplatten jedes Schweißkopfes in X-Richtung verstellbar und die andere der beiden Auflageplatten jedes Schweißkopfes in Y-Richtung verstellbar. Die benachbarten Auflageplatten benachbarter Schweißköpfe können gemeinsam einen Auflagetisch definieren.

Auf dem Auflagetisch kann ein Kunststoffprofilstab abgelegt werden. Jedem Kunststoffprofilstab ist daher ein Auflagetisch zuordenbar. Die beiden Auflageplatten eines Auflagetisches können in die gleiche Richtung verstellbar sein. Mittels Verstellung der Schweißköpfe und/oder Verstellung der Auflageplatten und/oder der Auflagetische können die Kunststoffprofilstäbe zwischen einer voneinander entfernten Stellung und einer sich einander annähernden Stellung verstellt werden. Die Schweißköpfe und/oder Auflageplatten und/oder der Auflagetische können "größer fahren", um sich voneinander zu entfernen, und "kleiner fahren", um sich anzunähern.

Jeder der Schweißköpfe umfasst zudem zumindest zwei Spannmittel zum Verspannen der beiden auf den Auflagetischen aufliegenden Kunststoffprofilstäben. Die beiden Spannmittel können funktional unabhängig voneinander sein. Ein Kunststoffprofilstab ist verspannt, wenn er vom Spannmittel fixiert wird. Ein Kunststoffprofilstab ist entspannt, wenn er vom Spannmittel nicht fixiert wird, sondern frei in zumindest eine Raumrichtung beweglich ist.

Jeder der Schweißköpfe umfasst zudem einen Heizspiegel, der entlang einer Raumrichtung beweg- und positionierbar gelagert ist und die Gehrungsflächen der Kunststoffprofilstäbe erwärmen und die Stäbe plastifizieren kann. Die beiden benachbarten Kunststoffprofilstäbe liegen hierbei winkelig, vorzugsweise rechtwinklig, zueinander in dem Schweißkopf. Der Heizspiegel ist in den Zwischenraum benachbarter Gehrungsflächen einfahrbar und ausfahrbar. Jeder der Schweißköpfe umfasst ferner einen Justieranschlag, der ebenfalls in den Zwischenraum benachbarter Gehrungsflächen einfahrbar und ausfahrbar ist. Gegen die Justieranschläge können die Kunststoffprofilstäbe zu ihrer eigenen Ausmittlung oder Ausrichtung angestellt werden.

Zudem kann jedem Auflagetisch oder jeder Auflageplatte ein Außenanschlag zugeordnet sein. Der Außenanschlag kann mit dem entsprechenden Auflagetisch / der entsprechenden Auflageplatte gemeinsam beweglich sein. Gegen den Außenanschlag kann der entsprechende Kunststoffprofilstab über seine Außenumfangsseite anliegen. Die Maschine kann ein Messsystem umfassen zur Erfassung von Längenwerten und/oder Positionswerten der Schweißköpfe, Auflagetische und/oder Auflageplatten. Die Positionswerte können Längenwerte sein oder umfassen oder eine Basis für die Ermittlung der Längenwerte sein oder Verschweißpositionen vorgeben oder eine Basis für die Ermittlung der Verschweißpositionen sein. Die Positionswerte eines Schweißkopfes, Auflagetisches und/oder einer Auflageplatte können eine X-Position und/oder eine Y-Position und/oder eine Z-Position umfassen. Die jeweilige X/Y/Z-Position kann einen Abstand zu einem maschinenfesten Referenzpunkt aufweisen, wodurch ein Längenwert gegeben ist.

Die Kunststoffprofilstäbe beider Paare können in der Maschine so vorhanden sein, vorzugsweise so eingelegt werden, dass jeder Kunststoffprofilstab auf den beiden benachbarten Auflageplatten benachbarter Schweißköpfe aufliegt. Die Kunststoffprofilstäbe können so eingelegt werden, dass ein Kunststoffprofilstab mit Überschlägen zwischen zwei Kunststoffprofilstäben mit Ausklinkungen liegt und umgekehrt. Die beiden Kunststoffprofilstäbe eines Paares liegen sich in der Maschine gegenüber. Die gegenüberliegende Anordnung der beiden Kunststoffprofilstäbe jedes Paares führt dazu, dass in jedem Schweißkopf ein Überschlag benachbart zu einer Ausklinkung angeordnet ist.

Denkbar ist, dass vor dem Einlegen oder nach dem Einlegen und vor dem Ermitteln die Schweißköpfe auf eine Initialanordnung verstellt werden, die von einem vordefinierten SOLL-Maß des herzustellenden Rahmens abhängt oder vorgegeben ist. Die Schweißköpfe sind in der Initialanordnung so zueinander beabstandet, wie dass ein Rahmen mit dem vordefinierten SOLL-Maß hergestellt werden könnte. Die Initialanordnung ist eine Ausgangsanordnung, von der das erfindungsgemäße Verfahren ausgehen kann. Ob die eingelegten Kunststoffprofilstäbe allerdings zu einem Rahmen mit SOLL-Maßen verschweißt werden können, ist zu diesem Zeitpunkt unbekannt. Die Initialanordnung ist daher eine grobe Schätzung. Aus der Initialanordnung können die Schweißköpfe auf Basis der ermittelten Längenwerte in eine Korrekturanordnung verstellt werden, bezeichnet durch den Verfahrensschritt "Verstellen zumindest eines Schweißkopfes". Denkbar ist, dass in der Initialanordnung zumindest das Einlegen der Kunststoffprofilstäbe und das Ermitteln der Längenwerte erfolgt. In der Initialanordnung können die Schweißköpfe in Ruhe zueinander verharren.

Das erstgenannte Ermitteln kann ein erstes Ermitteln sein. Das zweitgenannte Ermitteln kann ein zweites Ermitteln sein. Das erste Ermitteln kann in eine erste Raumrichtung erfolgen, wobei sich alle ersten Längenwerte in die erste Raumrichtung erstrecken. Das zweite Ermitteln kann in eine zweite Raumrichtung erfolgen, wobei sich alle zweiten Längenwerte in die zweite Raumrichtung erstrecken. Diese Raumrichtungen sind vorzugsweise orthogonal zueinander, beispielsweise X-Richtung und Y-Richtung. Das Ermitteln eines Längenwerts gibt Aufschluss über ein IST-Maß der Kunststoffprofilstäbe.

Der Längenwert kann von einem Überschlag und einer benachbarten Ausklinkung oder zwei Überschlägen desselben Kunststoffprofilstabs abhängen. Der Längenwert kann einen Abstand dazwischen angeben. Die Endpunkte der ermittelten Länge können vom Überschlag und der benachbarten Ausklinkung oder zwei Überschlägen desselben Kunststoffprofilstabs definiert sein. Das Ermitteln eines Längenwerts kann auch die Ermittlung der Verschweißposition der Auflagetische und/oder Auflageplatten umfassen. Beim Gegeneinanderdrücken können die Auflagetische und/oder Auflageplatten in die jeweilige Verschweißposition gefahren werden, wobei währenddessen das Gegeneinanderdrücken erfolgt. Dadurch ist gewährleistet, dass das Gegeneinanderdrücken lange genug erfolgt, um Lücken in der Sichtseite zu schließen, aber rechtzeitig endet, bevor Spannungen in den Überschlag / die Ausklinkung eingebracht werden.

Die Verschweißpositionen, in welche die Auflagetische und/oder Auflageplatten während des Gegeneinanderdrückens verfahren werden, können von den ermittelten Längenwerten vorgebbar/vorgegeben sein und/oder denjenigen Positionen entsprechen / auf denjenigen Positionen basieren, in welchen die Ermittlung stattfand. Die Ermittlung erfolgt nun in der Maschine selbst. Ferner sind die Kunststoffprofilstäbe durch das Einlegen bereits final zueinander angeordnet. Die vier miteinander zu verschweißenden Kunststoffprofilstäbe sind daher eindeutig bekannt. Das Ermitteln des zumindest einen ersten und/oder zumindest einen zweiten Längenwerts kann das Verstellen der Auflagetische und/oder Auflageplatten umfassen. Das Ermitteln des zumindest einen ersten und/oder zumindest einen zweiten Längenwerts kann mit verspannten Kunststoffprofilstäben erfolgen. Dies ermöglicht eine sichere Ermittlung.

Das Ermitteln des ersten Längenwerts kann den Unterschritt umfassen:
- Verstellen der Kunststoffprofilstäbe so zueinander, dass die Überschläge mit den Ausklinkungen fluchten.

Die Kunststoffprofilstäbe werden dadurch auf die maßlich unveränderlichen Abschnitte verstellt, wodurch ein unmittelbares Ermitteln des Längenwerts ermöglicht ist. Die Position beim Fluchten kann für die Auflagetische und/oder Auflageplatten der Kunststoffprofilstäbe mit Ausklinkungen eine Verschweißposition definieren. Dadurch stehen die Überschläge nach dem Gegeneinanderdrücken nicht über die Außenumfangsseiten der Kunststoffprofilstäbe mit Ausklinkungen hinaus. Die Überschläge stehen nach dem Gegeneinanderdrücken auch nicht bezüglich der Außenumfangsseiten der Kunststoffprofilstäbe mit Ausklinkungen zurück.

Das Ermitteln des zweiten Längenwerts kann den Unterschritt umfassen:
- Verstellen der Kunststoffprofilstäbe so zueinander, dass die Überschläge an den Ausklinkungen anschlagen.

Die Kunststoffprofilstäbe werden dadurch auf die maßlich unveränderlichen Abschnitte verstellt, wodurch ein unmittelbares Ermitteln des Längenwerts ermöglicht ist. Die Position beim Anschlagen kann für die Auflagetische und/oder Auflageplatten der Kunststoffprofilstäbe mit Überschlägen eine Verschweißposition definieren.

Das Verstellen kann eine Korrekturverstellung sein. Beim Verstellen zumindest eines Schweißkopfes kann der zumindest eine Schweißkopf in eine annähernde oder distanziertere Stellung verstellt werden, bezogen auf die anderen Schweißköpfe. Die Schweißköpfe sind nach Verstellung aus der anfänglichen Initialanordnung in die Korrekturanordnung verbracht. Es findet eine Anordnungskorrektur auf Basis der zuvor ermittelten Längenwerte statt.

Der Vorteil des Verstellens liegt darin, dass Position die Schweißköpfe nun an die IST-Maße der Kunststoffprofilstäbe angepasst werden. Und nicht wie bisher, die Kunststoffprofilstäbe durch materialentfernende Bearbeitung an den Überschlägen und/oder Ausklinkungen an SOLL-Maße des herzstellenden Rahmens angepasst werden müssen. Ferner führt die korrigierende Verstellung dazu, dass die Auflageplatten beim Gegeneinanderdrücken ausreichend Bewegungsraum haben. Sind beispielsweise die ermittelten Längenwerte in einer Raumrichtung geringer als entsprechende SOLL-Maße, so können die Schweißköpfe entsprechend in eine annähernde Stellung verstellt werden. Sind beispielsweise die ermittelten Längenwerte in einer Raumrichtung größer als entsprechende SOLL-Maße, so können die Schweißköpfe entsprechend in eine distanzierte Stellung verstellt werden. Die SOLL-Maße können SOLL-Maße des zu fertigenden Rahmens sein und/oder SOLL-Maße der Kunststoffprofilstäbe sein. Die SOLL-Maße können vordefinierte Maße sein. Ein Vergleich der ermittelten Längenwerte und entsprechender SOLL-Maße gibt die Verstellstrecke und/oder Verstellrichtung der Schweißköpfe vor. Die Auflageplatten können bei der Verstellung in relativer Ruhe zum jeweiligen Schweißkopf sein. Das Verstellen kann mit entspannten Kunststoffprofilstäben erfolgen. Dies ermöglicht eine sichere Verstellung, insb. wenn zwei benachbarte Schweißköpfe weiter voneinander beabstandet werden.

Denkbar ist, dass
- zwei benachbarte Schweißköpfe in eine bezüglich der anderen beiden Schweißköpfe distanziertere Stellung entlang einer Raumrichtung verstellt werden, wenn ein (oder alle) ermittelter Längenwert in dieser Raumrichtung größer ist als ein entsprechendes SOLL-Maß oder ein entsprechender Grenzwert und/oder
- zwei benachbarte Schweißköpfe in eine bezüglich der anderen beiden Schweißköpfe annähernde Stellung entlang einer Raumrichtung verstellt werden, wenn ein (oder alle) ermittelten Längenwert in dieser Raumrichtung kleiner ist als ein entsprechendes SOLL-Maß oder ein entsprechender Grenzwert.

Das Verstellen erfolgt somit auf Basis des zumindest einen ersten Längenwertes und des zumindest einen zweiten Längenwertes.

Beim Erhitzen werden die Gehrungsflächen erhitzt und die Kunststoffprofilstäbe plastifiziert. Dies kann mittels der Schweißspiegel erfolgen. Das Erhitzen kann mit verspannten Kunststoffprofilstäben erfolgen. Dies ermöglicht eine sichere Erhitzung. Die Überschläge und Ausklinkungen werden beim Erhitzen nicht zur Verschweißung plastifiziert.

Beim Gegeneinanderdrücken werden die Gehrungsflächen ineinander gedrückt zur Verschweißung. Die Kunststoffprofilstäbe werden miteinander verschmolzen. Das Gegeneinanderdrücken kann mittels Verfahren der Auflageplatten und/oder Auflagetische erfolgen. Die Auflageplatten und/oder Auflagetische können in ihre jeweilige Verschweißposition gefahren werden. Die beiden Auflageplatten eines Auflagetisches können in identische X- und/oder Y-Positionen verfahren werden. Dadurch ist ein um die Z-Richtung verdrehter Kunststoffprofilstab vermieden. Während die Gehrungsflächen verschmolzen werden, bleiben die Überschläge in den Ausklinkungen unverschweißt. Dadurch ist ein Holzfenster imitierbar. Auf der Sichtseite oder Hauptfläche des Rahmens stoßen die Kunststoffprofilstäbe stumpf und unverschweißt aneinander an. Das Gegeneinanderdrücken kann mit verspannten Kunststoffprofilstäben erfolgen. Dies ermöglicht eine sichere und maßgenaue Verschweißung.

Das erfindungsgemäße Verfahren kann als Verfahren zur Herstellung eines HFL-Rahmens (Holzfensterlook) bezeichnet werden. Denkbar ist, dass die Kunststoffprofilstäbe aus PVC gefertigt sind. Denkbar ist, dass das erfindungsgemäße Verfahren in der angegebenen Reihenfolge erfolgt. Das muss nicht für das Einlegen und/oder Ermitteln gelten. Denkbar ist nämlich, dass die Reihenfolge der beiden Verfahrensschritte "Einlegen" vertauscht werden kann. Denkbar ist nämlich auch, dass die Reihenfolge der beiden Verfahrensschritte "Ermitteln" vertauscht werden kann. Denkbar ist, dass vor dem Einlegen eine ablängende Bearbeitung der Kunststoffprofilstäbe erfolgt. Diese Bearbeitung kann das Erzeugen der Gehrungsflächen, Überschläge und Ausklinkungen umfassen. Eine Stablänge ist eine Länge oder ein Längenwert am jeweiligen Kunststoffprofilstab. Ein Stablänge kann eine Länge über den ganzen Kunststoffprofilstab sein oder nur über einen Teil davon. Ein Grenzwert kann ein vordefinierter Grenzwert sein. Der Grenzwert kann einem SOLL-Maß entsprechen. Verschweißposition ist die Position des Auflagetisches und/oder der Auflageplatte, die während des Gegeneinanderdrückens durch kleiner fahren angefahren wird.

Jeder Kunststoffprofilstab umfasst eine Sichtseite oder Hauptfläche. Bei den Kunststoffprofilstäben mit Überschlag sind die Überschläge sicht- oder hauptseitig ausgebildet. Bei den Kunststoffprofilstäben mit Ausklinkungen sind die Ausklinkungen sicht- oder hauptseitig ausgebildet. Die Ausklinkungen können sicht- oder hauptseitige Stufen sein. Die Ausklinkungen selbst sind kein Teil der Sichtseite oder Hauptfläche, da sie beim gefertigten Rahmen nicht sichtbar sind. Die Ausklinkungsstirnseiten verlaufen jeweils quer zur Längsachse des eigenen Kunststoffprofilstabs. Die Sichtseite oder Hauptfläche des Rahmens ist vollständig aus rechtwinkligen Flächen gebildet. Die Sichtseite oder Hauptfläche der Kunststoffprofilstäbe mit Überschlag steht über die verschweißten Gehrungsflächen hinaus und die Sichtseite oder Hauptfläche der Kunststoffprofilstäbe mit Ausklinkungen ist gegenüber den verschweißten Gehrungsflächen zurückgesetzt.

Jeder Kunststoffprofilstab umfasst an seinen beiden Enden stirnseitig jeweils eine Gehrungsfläche. Die Gehrungsflächen sind die zu verschweißenden Bereiche. Jede Gehrungsfläche schließt mit der Längsachse des eigenen Kunststoffprofilstabs einen Winkel ein, vorzugsweise von 45°. Die Winkelsumme benachbarter Gehrungsflächen beträgt 90°. Jeder Kunststoffprofilstab umfasst eine Außenumfangsseite und eine Innenumfangsseite. Umfang bezieht sich auf den zu fertigenden Rahmen, sofern nicht abweichend angegeben. Überschläge sind am Kunststoffprofilstab endseitig über die Gehrungsflächen in Längsrichtung des Kunststoffprofilstabs hinausstehende Abschnitte. Die Überschlaglängsseite ist an der Längsseite oder Innenumfangsseite des Profilstabs verortet. Die Überschlaglängsseite verläuft parallel zur Längsrichtung des Kunststoffprofilstabs. Die Überschlagstirnseite ist stirnseitig des Überschlags und auch stirnseitig des Kunststoffprofilstabs angeordnet. Die Überschlagstirnseiten verlaufen jeweils quer zur Längsachse des eigenen Kunststoffprofilstabs. Die benachbarten Überschlaglängsseite und die Überschlagstirnseite haben eine gemeinsame Kante. Ausklinkungen sind sichtseitig zurückgesetzte Bereiche im Kunststoffprofilstab. Jeder Überschlag greift formpassend in die entsprechende Ausklinkung ein. Die Formgestaltungen von Überschlag und Ausklinkung korrespondieren miteinander. Die Gehrungsflächen, Überschläge und Ausklinkungen können außerhalb der Maschine an den Kunststoffprofilstäben vorgesehen sein.

Gemäß einer denkbaren Weiterbildung kann das Verfahren umfassen:
- Verspannen der Kunststoffprofilstäbe.

Das Verspannen kann mittels Verspannmittel(n) erfolgen). Die Kunststoffprofilstäbe sind dann ortsfest gehalten bezüglich ihrer jeweiligen Auflageplatten / des jeweiligen Auflagetisches. Die Verspannung kann die Kunststoffprofilstäbe auf die jeweiligen Auflageplatten / den jeweiligen Auflagetisch und/oder den jeweiligen Außenanschlag / die jeweiligen Außenanschläge drücken. Die Verspannung kann eine Verspannung in zumindest eine Raumrichtung sein, vorzugsweise an alle drei kartesischen Raumrichtungen. Das Verspannen kann ein erstes Verspannen sein. Das (erste) Verspannen kann nach dem Einlegen und vor den Ermittlungen erfolgen. Dadurch ist das nachfolgende Ermitteln sicher und ohne Verrutschen der Kunststoffprofilstäbe möglich. Denkbar ist, dass die Verspannung bis zum Abschluss der Ermittlung aufrecht erhalten bleibt. Es kann auch ein weiteres Verspannen erfolgen. Das Verspannen kann ein zweites Verspannen sein. Das (zweite) Verspannen kann nach dem Verstellen der Schweißköpfe in die Korrekturanordnung oder dem Ausrichten der Kunststoffprofilstäbe und vor der Bearbeitung der Kunststoffprofilstäbe oder dem Erhitzen erfolgen. Dadurch ist das nachfolgende Bearbeiten oder Erhitzen sicher und ohne Verrutschen der Kunststoffprofilstäbe möglich. Denkbar ist, dass die (zweite) Verspannung bis nach dem Gegeneinanderdrücken aufrecht erhalten bleibt. Denkbar ist, dass die (zweite) Verspannung erst zum Entnehmen des gefertigten Rahmens gelöst wird. Denkbar ist ferner, dass das Ausrichten der Kunststoffprofilstäbe und das (zweite) Verspannen wiederholt wird. Denkbar ist nämlich, dass erst ein Paar von Kunststoffprofilstäben ausgerichtet wird und danach deren (zweite) Verspannung erfolgt, woraufhin dann das andere Paar von Kunststoffprofilstäben ausgerichtet wird und danach deren (zweite) Verspannung erfolgt. Das Ausrichten und (zweite) Verspannen kann somit paarweise erfolgen.

Gemäß einer denkbaren Weiterbildung kann das Verfahren umfassen:
- Entspannen aller Kunststoffprofilstäbe.

Das Entspannen löst die Verspannung. Das Entspannen kann ein erstes Entspannen sein. Das (erste) Entspannen kann nach den Ermittlungen und vor dem Verstellen erfolgen. Dies dient einer Verstellung der Schweißköpfe in die Korrekturanordnung. Das Entspannen kann ein zweites Entspannen sein. Das (zweite) Entspannen kann nach dem Gegeneinanderdrücken und vor dem Entnehmen erfolgen. Dies dient dem einfachen Entnehmen des gefertigten Rahmens.

Gemäß einer denkbaren Weiterbildung kann das Verfahren umfassen:
- Entnehmen des gefertigten Rahmens.

Das Entnehmen kann nach Gegeneinanderdrücken oder dem (zweiten) Entspannen erfolgen.

Gemäß einer denkbaren Weiterbildung kann das Verfahren vollständig in der einen einzigen Maschine ausgeführt werden. Das hat den Vorteil, dass weitere Maschinen nicht erforderlich sind, wodurch sich Kosten- und Bauraumvorteile ergeben.

Gemäß einer Weiterbildung des Verfahrens kann das Ermitteln des zumindest einen ersten Längenwertes den Unterschritt umfassen:
- Ermitteln der Stablänge jedes Kunststoffprofilstabs des ersten Paars zwischen seinen Überschlagstirnseiten.

Die Stablänge erstreckt sich zwischen den Überschlagstirnseiten. Es wird bei jedem der beiden Kunststoffprofilstäbe mit Überschlägen die Stablänge in Längsrichtung des jeweiligen Kunststoffprofilstabs zwischen seinen beiden Überschlagstirnseiten ermittelt. Da die Überschläge und somit auch die davon ausgebildeten Überschlagstirnseiten ein unveränderliches IST-Maß vorgeben, kann dadurch jeweils ein Längenwert ermittelt werden, auf Basis dessen die Verstellung der Schweißköpfe in die Korrekturanordnung erfolgen kann. Dieser Schritt dient dem Ermitteln der ganzen Längen der Kunststoffprofilstäbe mit Überschlägen.

Gemäß einer denkbaren Weiterbildung des Verfahrens kann das Ermitteln des zumindest einen ersten Längenwertes den Unterschritt umfassen:
- Erfassen der Positionswerte der Schweißköpfe, Auflagetische und/oder Auflageplatten, vorzugsweise derjenigen Schweißköpfe, Auflagetische und/oder Auflageplatten, auf welchen die Kunststoffprofilstäbe mit Ausklinkungen angeordnet sind.

Die Erfassung kann mittels Messsystem der Maschine erfolgen. Die Positionswerte können Längenwerte umfassen oder eine Basis für die Ermittlung der Längenwerte sein. Beispielsweise können anhand der Positionswerte der Schweißköpfe, Auflagetische und/oder Auflageplatten Abstände der Schweißköpfe, Auflagetische und/oder Auflageplatten zueinander errechnet werden und so die Längenwerte oder Stablänge ermittelt werden. Die Positionswerte beim Erfassen können die Verschweißpositionen der Auflagetische und/oder Auflageplatten vorgeben oder eine Basis für die Ermittlung der Verschweißpositionen Auflagetische und/oder Auflageplatten sein.

Gemäß einer denkbaren Weiterbildung des Verfahrens kann das Ermitteln des zumindest einen ersten Längenwertes den Unterschritt umfassen:
- Erfassen mehrerer erster Längenwerte,
- Vergleichen der ersten Längenwerte miteinander und/oder mit einem Grenzwert.

Dies dient der Qualitätssicherung, denn dadurch kann das Verfahren rechtzeitig abgebrochen werden oder rechtzeitig Aufschluss über eine SOLL-Maß-Treue gegeben werden. Beim Vergleichen miteinander kann eine Differenz gebildet werden, die mit einem Grenzwert abgeglichen werden kann, jenseits dessen nicht akzeptable IST-Maße vorliegen. Beim direkten Vergleichen der Längenwerte einzeln mit einem Grenzwert, kann abgeglichen werden ob jeder einzelne Kunststoffprofilstab jenseits des Grenzwerts liegt und daher ein nicht akzeptables IST-Maß aufweist.

Gemäß einer denkbaren Weiterbildung des Verfahrens kann der größere der beiden ersten Längenwerte die Verschweißpositionen der betroffenen Schweißköpfe, Auflagetische und/oder Auflageplatten des anderen Kunststoffprofilstabs mit Überschlägen vorgeben. Die Positionswerte für eine Raumrichtung der Schweißköpfe, Auflagetische und/oder Auflageplatten, auf denen der größere der beiden ersten Längenwerte basiert, können identisch für die Positionswerte der gegenüberliegenden Schweißköpfe, Auflagetische und/oder Auflageplatten als deren Verschweißposition übernommen werden. Dies ermöglicht die Herstellung eines rechtwinkligen Rahmens.

Gemäß einer Weiterbildung des Verfahrens kann das Ermitteln des zumindest einen ersten Längenwertes den Unterschritt umfassen:
- Verstellen von Außenanschlägen gegen die jeweils benachbarte Überschlagstirnseite.

Die Außenanschläge kontaktieren dann die Überschlagstirnseiten. Die Außenanschläge können Außenanschläge derjenigen Auflagetische und/oder Auflageplatten sein, auf welchen die Kunststoffprofilstäbe mit Ausklinkungen aufliegen. Dadurch können in einfacher Weise Längenwerte ermittelt werden, beispielsweise anhand der Positionswerte der Schweißköpfe, Auflagetische und/oder Auflageplatten. Denkbar ist, dass hierzu Positionswerte in X-Richtung ermittelt werden.

Gemäß einer Weiterbildung des Verfahrens kann das Ermitteln des zumindest einen zweiten Längenwertes den Unterschritt umfassen:
- Ermitteln der Stablänge jedes Kunststoffprofilstabs des zweiten Paars zwischen seinen Ausklinkungsstirnseiten.

Die Stablänge erstreckt sich zwischen den Ausklinkungsstirnseiten. Es wird bei jedem der beiden Kunststoffprofilstäbe mit Ausklinkungen die Stablänge in Längsrichtung des jeweiligen Kunststoffprofilstabs zwischen seinen beiden Ausklinkungsstirnseiten ermittelt. Da die Ausklinkungen und somit auch die davon ausgebildeten Ausklinkungsstirnseiten ein unveränderliches IST-Maß vorgeben, kann dadurch jeweils ein Längenwert ermittelt werden, auf Basis dessen die Verstellung der Schweißköpfe in die Korrekturanordnung erfolgen kann. Dieser Schritt dient dem Ermitteln einer Länge der Kunststoffprofilstäbe mit Ausklinkung.

Gemäß einer denkbaren Weiterbildung des Verfahrens kann das Ermitteln des zumindest einen zweiten Längenwertes den Unterschritt umfassen:
- Erfassen der Positionswerte der Schweißköpfe, Auflagetische und/oder Auflageplatten, vorzugsweise derjenigen Schweißköpfe, Auflagetische und/oder Auflageplatten, auf welchen die Kunststoffprofilstäbe mit Überschlägen angeordnet sind.

Die Erfassung kann mittels Messsystem der Maschine erfolgen. Die Positionswerte können Längenwerte umfassen oder eine Basis für die Ermittlung der Längenwerte sein. Beispielsweise können anhand der Positionswerte der Schweißköpfe, Auflagetische und/oder Auflageplatten Abstände der Schweißköpfe, Auflagetische und/oder Auflageplatten zueinander errechnet werden und so die Längenwerte oder Stablänge ermittelt werden.

Gemäß einer denkbaren Weiterbildung des Verfahrens kann das Ermitteln des zumindest einen zweiten Längenwertes den Unterschritt umfassen:
- Erfassen mehrerer zweiter Längenwerte,
- Vergleichen der zweiten Längenwerte miteinander und/oder mit einem Grenzwert.

Dies dient der Qualitätssicherung, denn dadurch kann das Verfahren rechtzeitig abgebrochen werden oder rechtzeitig Aufschluss über eine SOLL-Maß-Treue gegeben werden. Beim Vergleichen miteinander kann eine Differenz gebildet werden, die mit einem Grenzwert abgeglichen werden kann, jenseits dessen nicht akzeptable IST-Maße vorliegen. Beim direkten Vergleichen der Längenwerte einzeln mit einem Grenzwert, kann abgeglichen werden ob jeder einzelne Kunststoffprofilstab jenseits des Grenzwerts liegt und daher ein nicht akzeptables IST-Maß aufweist.

Gemäß einer denkbaren Weiterbildung des Verfahrens kann der größere der beiden zweiten Längenwerte die Verschweißpositionen der betroffenen Schweißköpfe, Auflagetische und/oder Auflageplatten des anderen Kunststoffprofilstabs mit Ausklinkungen vorgeben. Die Positionswerte für eine Raumrichtung der Schweißköpfe, Auflagetische und/oder Auflageplatten, auf denen der größere der beiden ersten Längenwerte basiert, können identisch für die Positionswerte der gegenüberliegenden Schweißköpfe, Auflagetische und/oder Auflageplatten als deren Verschweißposition übernommen werden. Dies ermöglicht die Herstellung eines rechtwinkligen Rahmens.

Gemäß einer Weiterbildung des Verfahrens kann das Ermitteln des zumindest einen zweiten Längenwertes den Unterschritt umfassen:
- Verstellen der Überschlaglängsseiten gegen die jeweils benachbarte Ausklinkungsstirnseite.

Die Ausklinkungsstirnseiten kontaktieren dann die Überschlaglängsseiten. Dadurch können in einfacher Weise Längenwerte ermittelt werden, beispielsweise anhand der Positionswerte der Schweißköpfe, Auflagetische und/oder Auflageplatten. Denkbar ist, dass hierzu Positionswerte in Y-Richtung ermittelt werden.

Gemäß einer Weiterbildung des Verfahrens kann das Ermitteln des zumindest einen ersten Längenwertes und/oder des zumindest einen zweiten Längenwertes während beabstandeter benachbarter Gehrungsflächen erfolgen. Dies dient der Distanzierung benachbarter Gehrungsflächen zueinander und/oder der Überschlaglängsseiten zur benachbarten Ausklinkungsstirnseite während der Ermittlung. Dies verhindert, dass unsauber geschnittene Gehrungsflächen einen Einfluss auf die Ermittlung der Längenwerte und/oder Verschweißpositionen haben. Die Gehrungsflächen kontaktieren sich während der Ermittlung nicht. Denkbar ist, dass bei der Ermittlung des zumindest einen ersten Längenwertes die Auflagetische und/oder Auflageplatten vor dem Verstellen von Außenanschlägen gegen die Überschlagstirnseiten größer fahren, vorzugsweise um ein jeweiliges Maß von 5 mm bis 15 mm, vorzugsweise von 10 mm oder ein absolutes Maß von 10 mm bis 30 mm, vorzugsweise 20 mm. Dies dient der Distanzierung benachbarter Gehrungsflächen zueinander und/oder der Überschlaglängsseiten zur benachbarten Ausklinkungsstirnseite während der Ermittlung. Dies verhindert, dass unsauber geschnittene Gehrungsflächen einen Einfluss auf die Ermittlung der Längenwerte und/oder Verschweißpositionen haben. Die Gehrungsflächen kontaktieren sich während der Ermittlung nicht. Denkbar ist bei der Ermittlung des zumindest einen zweiten Längenwertes, dass die Auflagetische und/oder Auflageplatten vor dem Verstellen von Überschlaglängsseiten gegen die jeweils benachbarte Ausklinkungsstirnseite größer fahren, vorzugsweise um ein jeweiliges Maß von 5 mm bis 15 mm, vorzugsweise von 10 mm oder ein absolutes Maß von 10 mm bis 30 mm, vorzugsweise 20 mm.

Gemäß einer Weiterbildung des Verfahrens kann das Ermitteln des zumindest einen ersten Längenwertes und/oder des zumindest einen zweiten Längenwertes erfolgen anhand der Position von
- Auflageplatten der Maschine, auf denen die Kunststoffprofilstäbe aufliegen, und/oder
- Auflagetischen der Maschine, auf denen die Kunststoffprofilstäbe aufliegen, und/oder
- Schweißköpfen der Maschine.

Die Schweißköpfe können Auflageplatten und/oder Auflagetische umfassen, auf welchen die Kunststoffprofilstäbe aufliegen. Die Positionen sind darstellbar durch entsprechende Positionswerte. Somit kann in vorteilhafter Weise das ohnehin vorhandene Messsystem der Maschine selbst verwendet werden. Dezidierte Längenmesssysteme sind daher nicht notwendig.

Gemäß einer Weiterbildung des Verfahrens kann es den Verfahrensschritt umfassen:
- Ausrichten der Kunststoffprofilstäbe an Justieranschlägen, vorzugsweise vor und/oder nach dem Ermitteln der Längenwerte.

Während der Verstellung der Schweißköpfe können sich die Kunststoffprofilstäbe verschoben haben. Das Ausrichten dient dazu, die Kunststoffprofilstäbe in eine verschweißbare Stellung zu bringen und die ungewollte Verschiebung der Stäbe zu berichtigen. Die Justieranschläge können hierzu in den Zwischenraum benachbarter Gehrungsflächen eingefahren werden. Die Kunststoffprofilstäbe können sodann gegen die Justieranschläge angestellt werden und zentrieren sich daher selbst daran. Das Anstellen kann durch ein kleiner fahren von Auflageplatten und/oder Auflagetischen erfolgen. Die Schweißköpfe können dabei ortsfest bleiben. Vorzugsweise erfolgt das Ausrichten nach dem (zweiten) Entspannen oder dem Verstellung der Schweißköpfe und vor der Bearbeitung der Kunststoffprofilstäbe oder dem Erhitzen erfolgen.

Gemäß einer Weiterbildung des Verfahrens kann das Gegeneinanderdrücken derart erfolgen, dass
- Auflageplatten der Maschine, auf denen die Kunststoffprofilstäbe aufliegen, und/oder
- Auflagetische der Maschine, auf denen die Kunststoffprofilstäbe aufliegen, auf eine jeweilige Verschweißposition verfahren werden. Die Schweißköpfe können beim Gegeneinanderdrücken in der Korrekturanordnung verharren.

Gemäß einer Weiterbildung des Verfahrens kann nach dem Einlegen der Kunststoffprofilstäbe und dem Gegeneinanderdrücken in der Maschine entweder keine materialentfernende und/oder ablängende Bearbeitung der Kunststoffprofilstäbe erfolgen oder eine materialentfernende und/oder ablängende Bearbeitung der Gehrungsflächen erfolgen. Die Bearbeitung kann nach dem Verstellen der Schweißköpfe oder nach dem Ausrichten oder nach dem (zweiten) Verspannen und vor dem Gegeneinanderdrücken erfolgen. Die Bearbeitung kann ein Fräsen sein. Denkbar ist, dass nach dem Bearbeiten das Erhitzen erfolgt. Denkbar ist, dass das Bearbeiten und Erhitzen einmalig wiederholt oder mehrfach wiederholt wird. Das Bearbeiten kann dem Ebnen der Gehrungsflächen dienen, um Unebenheiten auszugleichen, wodurch Material entfernt wird, welches andernfalls eine Schweißwulst bilden würde an der der Sichtseite gegenüberliegenden Seite des Rahmens. Das Bearbeiten kann mit verspannten Kunststoffprofilstäben erfolgen. Dies ermöglicht eine sichere Bearbeitung.

Sollten Bauteile und/oder Verfahrensschritte mehrfach offenbart sein, sollen Ausgestaltungen und Vorteile, die nur für eines der Bauteile beschrieben sind, gleichsam auch für die anderen entsprechenden Bauteile als in optionaler Weise offenbart gelten.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Draufsicht einer Maschine,
- Fig. 2: ein Ablaufdiagramm eines Verfahrens,
- Fig. 3: eine Anordnung von Kunststoffprofilstäben in der Maschine,
- Fig. 4: eine Detailansicht des Bereichs IV aus Fig. 3,
- Fig. 5: eine Anordnung von Kunststoffprofilstäben in der Maschine beim ersten Ermitteln,
- Fig. 6: eine Detailansicht des Bereichs VI aus Fig. 5,
- Fig. 7: eine Anordnung von Kunststoffprofilstäben in der Maschine beim zweiten Ermitteln,
- Fig. 8: eine Detailansicht des Bereichs VIII aus Fig. 7,
- Fig. 9: einen gefertigten Rahmen und
- Fig. 10: eine Detailansicht des Bereichs X aus Fig. 9.

In den Figuren sind gleiche oder einander entsprechende Elemente jeweils mit den gleichen Bezugszeichen bezeichnet und werden daher, sofern nicht zweckmäßig, nicht erneut beschrieben. Bereits beschriebene Merkmale werden zur Vermeidung von Wiederholungen nicht erneut beschrieben und sind auf alle Elemente mit gleichen oder einander entsprechenden Bezugszeichen anwendbar, sofern nicht explizit ausgeschlossen. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z. B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

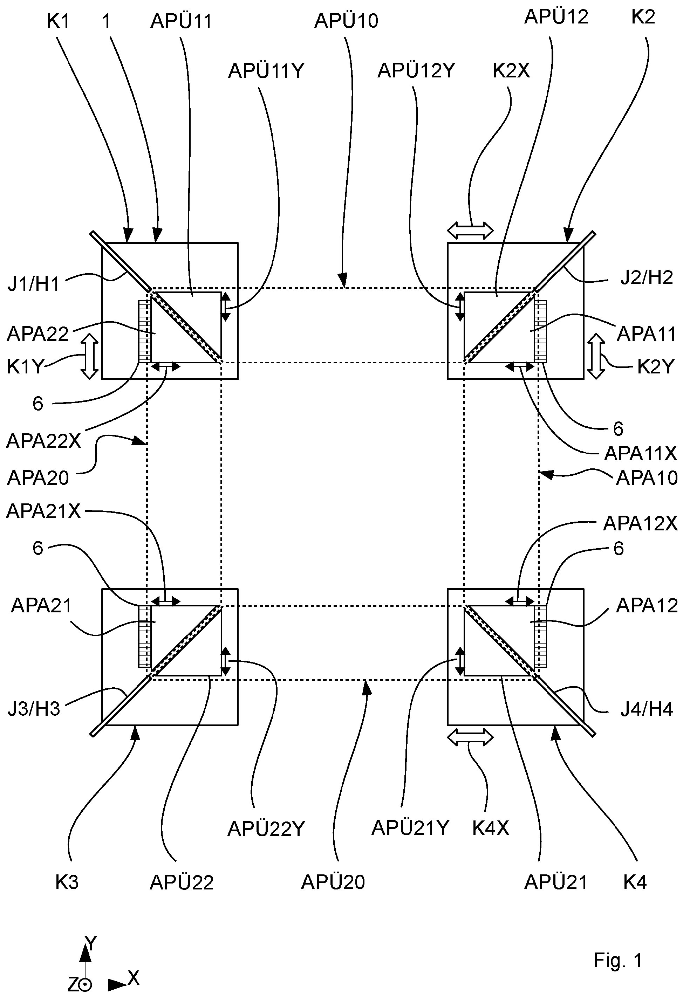

**Figur 1** zeigt eine Maschine 1 in der Draufsicht. Die Maschine 1 ist als eine 4-Kopf-Schweißmaschine abgebildet. Zur räumlichen Nachvollziehbarkeit wird ein kartesisches Koordinatensystem angenommen, wobei die Richtungen X und Y eine horizontale Ebene aufspannen und die Richtung Z rechtwinklig abragt. Jeder der vier Schweißköpfe K1, K2, K3, K4 kann beweglich sein, zumindest in X- und/oder Y-Richtung. Der Schweißkopf K1 ist vorliegend beweglich in Y-Richtung, angezeigt per Pfeil K1Y. Der Schweißkopf K2 ist vorliegend beweglich in X-Richtung und Y-Richtung, angezeigt per Pfeilen K2X und K2Y. Der Schweißkopf K3 ist ortsfest und wird für die Zwecke des Verfahrens nicht bewegt in die Richtungen X und Y. Der Schweißkopf K4 ist vorliegend beweglich in X-Richtung, angezeigt per Pfeil K4X. Jeder Schweißkopf K1, K2, K3, K4 trägt zwei Auflageplatten. Der Schweißkopf K1 trägt die Auflageplatten APÜ11 und APA22. Der Schweißkopf K2 trägt die Auflageplatten APÜ12 und APA11. Der Schweißkopf K3 trägt die Auflageplatten APÜ22 und APA21. Der Schweißkopf K4 trägt die Auflageplatten APÜ21 undAPA12. Auf den Auflageplatten APA11, APA12, APA21, APA22, APÜ11, APÜ12, APÜ21, APÜ22 können Kunststoffprofilstäbe PÜ1, PÜ2, PA1, PA2 aufgelegt werden. Die Auflageplatten APA11, APA12, APA21, APA22, APÜ11, APÜ12, APÜ21, APÜ22 können bei Bewegung des jeweiligen Schweißkopfes K1, K2, K3, K4 entsprechend mitverstellbar sein. Hierbei sind sie in relativer Ruhe zum jeweiligen Schweißkopf K1, K2, K3, K4.

Die Auflageplatten APA11, APA12, APA21, APA22, APÜ11, APÜ12, APÜ21, APÜ22 können zusätzlich gegenüber dem jeweiligen Schweißkopf K1, K2, K3, K4 beweglich sein. Daher gilt:
Die Auflageplatte APA11 ist vorliegend beweglich in X-Richtung, angezeigt per Pfeil APA11X.
Die Auflageplatte APA12 ist vorliegend beweglich in X-Richtung, angezeigt per Pfeil APA12X.
Die Auflageplatte APA21 ist vorliegend beweglich in X-Richtung, angezeigt per Pfeil APA21X.
Die Auflageplatte APA22 ist vorliegend beweglich in X-Richtung, angezeigt per Pfeil APA22X.
Die Auflageplatte APÜ11 ist vorliegend beweglich in Y-Richtung, angezeigt per Pfeil APA11Y.
Die Auflageplatte APÜ12 ist vorliegend beweglich in Y-Richtung, angezeigt per Pfeil APA12Y.
Die Auflageplatte APÜ21 ist vorliegend beweglich in Y-Richtung, angezeigt per Pfeil APA21Y.
Die Auflageplatte APÜ22 ist vorliegend beweglich in Y-Richtung, angezeigt per Pfeil APA22Y.

Die benachbarten Auflageplatten APÜ11, APÜ12 definieren einen Auflagetisch APÜ10. Auf diese Auflageplatten APÜ11, APÜ12 / diesen Auflagetisch APÜ10 ist ein Kunststoffprofilstab ablegbar, beispielsweise ein Kunststoffprofilstab PÜ1. Die benachbarten Auflageplatten APÜ21, APÜ22 definieren einen Auflagetisch APÜ20. Auf diese Auflageplatten APÜ21, APÜ22 / diesen Auflagetisch APÜ20 ist ein Kunststoffprofilstab ablegbar, beispielsweise ein Kunststoffprofilstab PÜ2. Die benachbarten Auflageplatten APA11, APA12 definieren einen Auflagetisch APA10. Auf diese Auflageplatten APA11, APA12 / diesen Auflagetisch APA10 ist ein Kunststoffprofilstab ablegbar, beispielsweise ein Kunststoffprofilstab PA1. Die benachbarten Auflageplatten APA21, APA22 definieren einen Auflagetisch APA20. Auf diese Auflageplatten APA21, APA22 / diesen Auflagetisch APA20 ist ein Kunststoffprofilstab ablegbar, beispielsweise ein Kunststoffprofilstab PA2. Jedem Kunststoffprofilstab PÜ1, PÜ2, PA1, PA2 ist daher ein Auflagetisch APÜ10, APÜ20, APA10, APA20 zugeordnet. Die beiden Auflageplatten APA11, APA12, APA21, APA22, APÜ11, APÜ12, APÜ21, APÜ22 eines Auflagetisches sind in die gleiche Richtung verstellbar.

Mittels Verstellung der Schweißköpfe K1, K2, K3, K4 und/oder Verstellung der Auflageplatten APA11, APA12, APA21, APA22, APÜ11, APÜ12, APÜ21, APÜ22 und/oder der Auflagetische APÜ10, APÜ20, APA10, APA20 können die Kunststoffprofilstäbe PÜ1, PÜ2, PA1, PA2 zwischen einer voneinander entfernten Stellung und einer sich einander annähernden Stellung verstellt werden; sie können insbesondere "größer fahren" und "kleiner fahren".

Jeder der Schweißköpfe K1, K2, K3, K4 umfasst zudem zumindest zwei Spannmittel (nicht dargestellt) zum Verspannen der beiden auf den Auflagetischen APÜ10, APÜ20, APA10, APA20 aufliegenden Kunststoffprofilstäben PÜ1, PÜ2, PA1, PA2.

Jeder der Schweißköpfe K1, K2, K3, K4 umfasst ferner einen Heizspiegel H1, H2, H3, H4, der entlang einer Raumrichtung beweg- und positionierbar gelagert ist und die Gehrungsflächen der Kunststoffprofilstäbe PÜ1, PÜ2, PA1, PA2 erwärmen und die Kunststoffprofilstäbe PÜ1, PÜ2, PA1, PA2 plastifizieren kann. Die beiden benachbarten Kunststoffprofilstäbe PÜ1, PÜ2, PA1, PA2 liegen hierbei winkelig, vorzugsweise rechtwinklig, zueinander in dem Schweißkopf K1, K2, K3, K4. Jeder Heizspiegel H1, H2, H3, H4 ist in den Zwischenraum benachbarter Gehrungsflächen einfahrbar und ausfahrbar.

Jeder der Schweißköpfe K1, K2, K3, K4 umfasst des weiteren einen Justieranschlag J1, J2, J3, J4, der ebenfalls in den Zwischenraum benachbarter Gehrungsflächen einfahrbar und ausfahrbar ist. Gegen die Justieranschläge J1, J2, J3, J4 können die Kunststoffprofilstäbe PÜ1, PÜ2, PA1, PA2 zu ihrer eigenen Ausmittlung oder Ausrichtung angestellt werden. Zudem ist jeder Auflageplatte APA11, APA12, APA21, APA22, APÜ11, APÜ12, APÜ21, APÜ22 ein Außenanschlag 6 zugeordnet sein. Dargestellt sind nur die Außenanschläge 6 der Auflageplatten APA11, APA12, APA21, APA22. Der Außenanschlag 6 ist mit der Auflageplatte APA11, APA12, APA21, APA22, APÜ11, APÜ12, APÜ21, APÜ22 gemeinsam beweglich. Gegen den Außenanschlag 6 kann der entsprechende Kunststoffprofilstab PÜ1, PÜ2, PA1, PA2 über seine Außenumfangsseite anliegen. Die Maschine 1 umfasst ein Messsystem zur Erfassung von Positionswerten der Schweißköpfe K1, K2, K3, K4, Auflagetische APÜ10, APÜ20, APA10, APA20 und/oder Auflageplatten APA11, APA12, APA21, APA22, APÜ11, APÜ12, APÜ21, APÜ22.

Zur Vermeidung von Wiederholungen sollen bereits beschriebene, aber nicht erneut wiederholte Merkmale gleichsam als offenbart und beschrieben gelten.

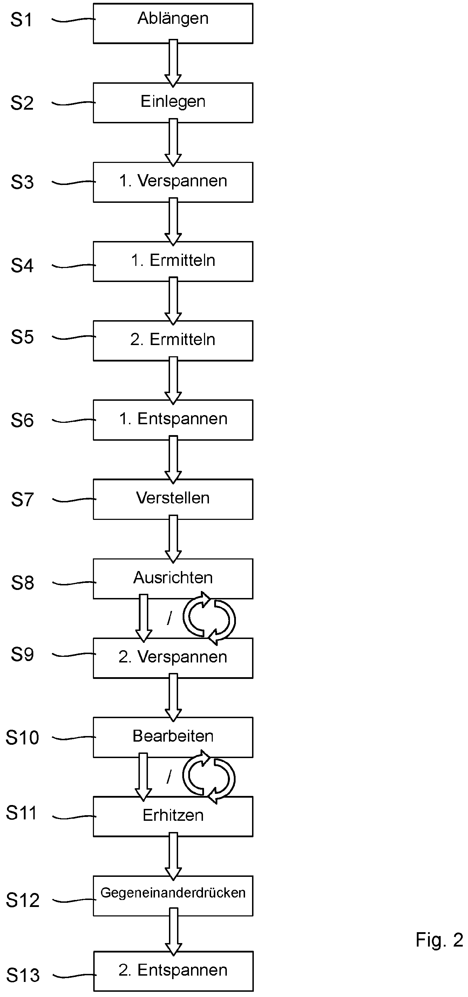

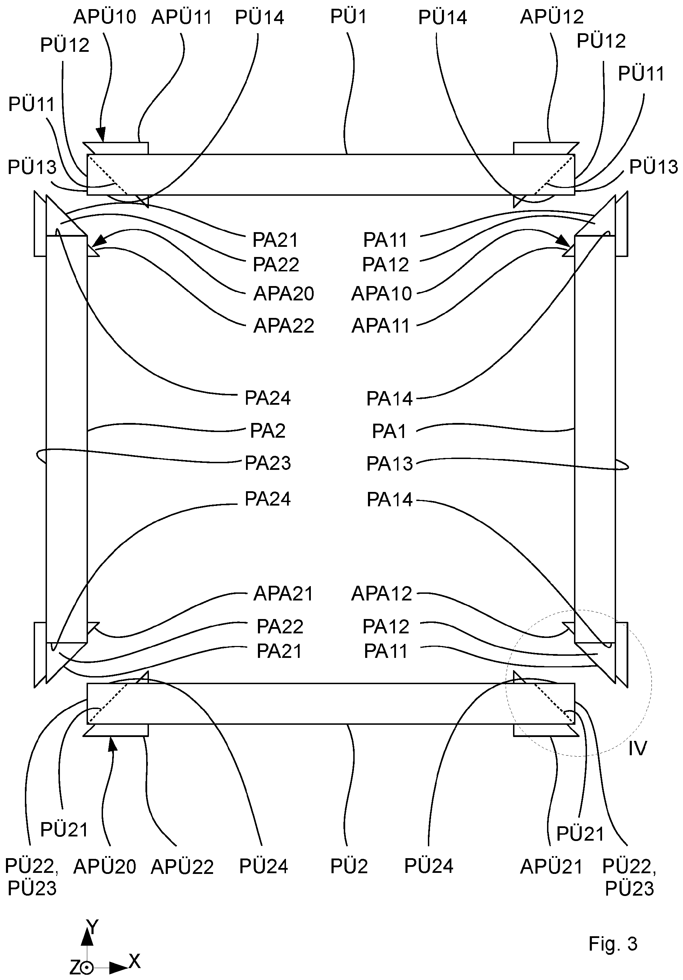

In **Figur 2** ist ein Ablaufdiagramm eines Verfahrens gezeigt, wobei von hier aus auf die Figuren 3 bis 10 verwiesen wird, in welchen einzelne Aspekte des Verfahrens detaillierter gezeigt sind. Mit dem Verfahren werden vier Kunststoffprofilstäbe PÜ1, PÜ2, PA1, PA2 zu einem Rahmen 2 mit sichtflächigen Stumpfstößen 4 unter Verwendung der Maschine 1 verschweißt. Der Rahmen kann ein HFL-Rahmen (Holzfensterlook) sein.

In Schritt S1 erfolgt ein Ablängen der Kunststoffprofilstäbe PÜ1, PÜ2, PA1, PA2 und das materialentfernende Einbringen von Gehrungsflächen. Ferner werden Überschläge und Ausklinkungen ausgebildet. Das Ablängen S1 kann außerhalb der Maschine 1 erfolgen. Jeder Kunststoffprofilstab PÜ1, PÜ2, PA1, PA2 umfasst eine Sichtseite oder Hauptfläche, die in den Figuren 3 bis 10 dargestellt ist. Jeder Kunststoffprofilstab PÜ1, PÜ2, PA1, PA2 umfasst eine Außenumfangsseite und eine Innenumfangsseite. Bei den Kunststoffprofilstäben PÜ1, PÜ2 mit Überschlag sind die Überschläge PÜ12, PÜ22 sicht- oder hauptseitig ausgebildet. Bei den Kunststoffprofilstäben PA1, PA2 mit Ausklinkungen sind die Ausklinkungen PA12, PA22 sicht- oder hauptseitig ausgebildet.

Wie **Figur 3** zeigt, ist allen Kunststoffprofilstäben PÜ1, PÜ2, PA1, PA2 gemein, dass sie jeweils beidends Gehrungsflächen PÜ11, PÜ21, PA11, PA21 aufweisen, die im 45° Winkel zur Längsachse des eigenen Kunststoffprofilstabs PÜ1, PÜ2, PA1, PA2 verlaufen. Den beiden Kunststoffprofilstäben PÜ1, PÜ2 des ersten Paars (mit Überschlägen) sind jeweils beidends Überschläge PÜ12, PÜ22 gemein auf, die über die entsprechenden Gehrungsflächen PÜ11, PÜ21 hinaus stehen. Jeder Überschlag PÜ12, PÜ22 umfasst eine Überschlagstirnseite PÜ13, PÜ23, die stirnseitig des Überschlags PÜ12, PÜ22 und auch stirnseitig des Kunststoffprofilstabs PÜ1, PÜ2 angeordnet sind. Jeder Überschlag PÜ12, PÜ22 umfasst zudem eine Überschlaglängsseite PÜ14, PÜ24, die an der Längsseite oder Innenumfangsseite des Profilstabs PÜ1, PÜ2 des ersten Paars verortet ist. Die Überschlaglängsseite PÜ14, PÜ24 verläuft jeweils parallel zur Längsrichtung des entsprechenden Kunststoffprofilstabs PÜ1, PÜ2. Die Überschlaglängsseite PÜ14, PÜ24 und die Überschlagstirnseite PÜ13, PÜ23 haben gemeinsame Kanten.

Den beiden Kunststoffprofilstäben PA1, PA2 des zweiten Paars (mit Ausklinkungen) sind jeweils beidends Ausklinkungen PA12, PA22 gemein, die gegenüber den Gehrungsflächen PA11, PA21 sichtseitig stufenartig zurückgesetzte Bereiche im Kunststoffprofilstab PA1, PA2 sind. Es ist erkennbar, dass jeweils einer der Überschläge PÜ12, PÜ22 formpassend in die entsprechende Ausklinkung PA12, PA22 eingreifen kann. Die Außenumfangsseiten jedes Kunststoffprofilstabs PA1, PA2 des zweiten Paars sind mit den Bezugszeichen PA13, PA23 versehen. Jede Ausklinkung PA12, PA22 umfasst eine Ausklinkungsstirnseite PA14, PA24, die quer zur
zur Längsachse des eigenen Kunststoffprofilstabs PA1, PA2 verläuft.

In Schritt S2 erfolgt ein Einlegen des ersten Paars von Kunststoffprofilstäben PÜ1, PÜ2 und des zweiten Paars von Kunststoffprofilstäben PA1, PA2 in die Maschine 1, zu sehen in Figur 3. Die Kunststoffprofilstäbe PÜ1, PÜ2, PA1, PA2 beider Paare sind in der Maschine 1 so vorhanden, dass jeder Kunststoffprofilstab PÜ1, PÜ2, PA1, PA2 auf den beiden benachbarten Auflageplatten APA11, APA12, APA21, APA22, APÜ11, APÜ12, APÜ21, APÜ22 benachbarter Schweißköpfe K1, K2, K3, K4 aufliegt. Die Kunststoffprofilstäbe PÜ1, PÜ2, PA1, PA2 sind so eingelegt, dass ein Kunststoffprofilstab PÜ1, PÜ2 mit Überschlägen PÜ12, PÜ22 zwischen zwei Kunststoffprofilstäben PA1, PA2 mit Ausklinkungen PA12, PA22 liegt und umgekehrt. Die beiden Kunststoffprofilstäbe PÜ1, PÜ2, PA1, PA2 eines Paares liegen sich daher in der Maschine 1 gegenüber.

Vor dem Einlegen S2 oder nach dem Einlegen S2 und vor einem Ermitteln S4 sind die Schweißköpfe K1, K2, K3, K4 auf eine Initialanordnung verstellt, die von einem vordefinierten SOLL-Maß des herzustellenden Rahmens abhängt.

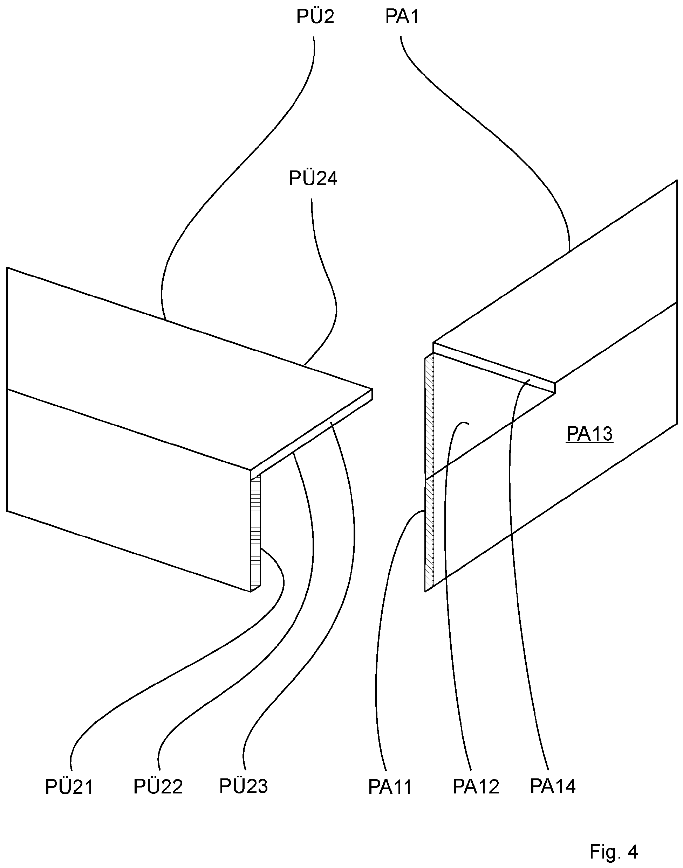

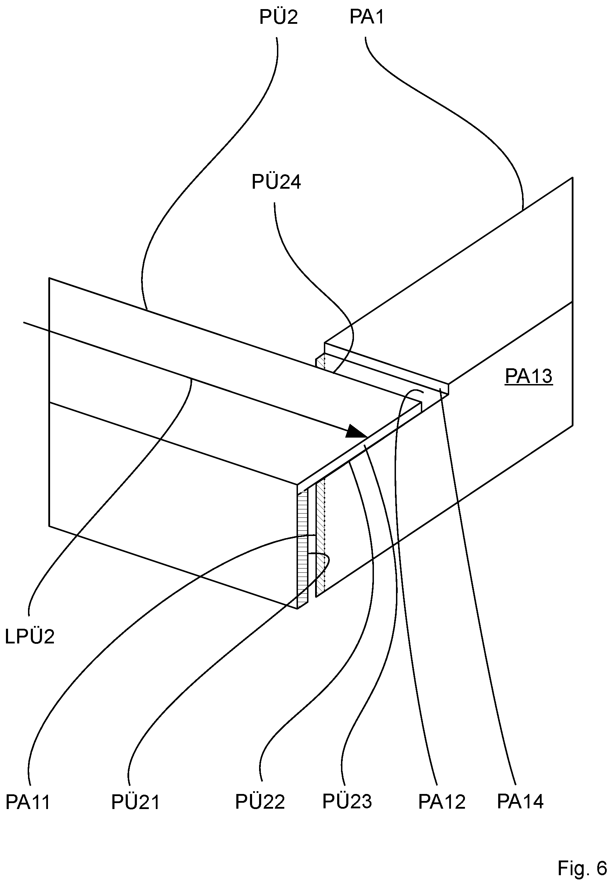

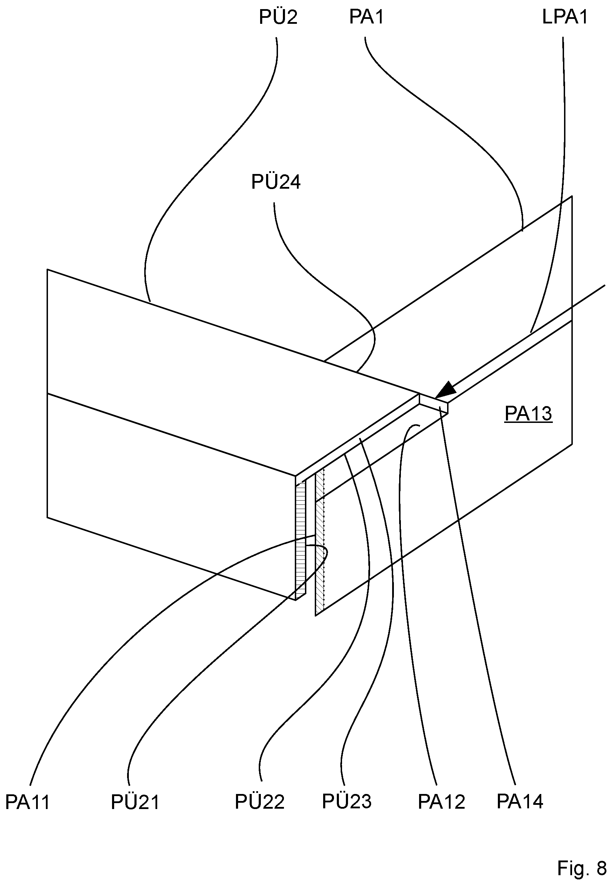

In **Figur 4** sind die zu verschmelzenden Bereiche der Gehrungsflächen PÜ21, PA11 schraffiert dargestellt. Gleiches gilt für die Figuren 6 und 8.

In Schritt S3 erfolgt ein (erstes) Verspannen aller Kunststoffprofilstäbe PÜ1, PÜ2, PA1, PA2 mittels der Spannmittel. Die Kunststoffprofilstäbe PÜ1, PÜ2, PA1, PA2 sind dann ortsfest gehalten bezüglich ihrer jeweiligen Auflageplatten APA11, APA12, APA21, APA22, APÜ11, APÜ12, APÜ21, APÜ22 / des jeweiligen Auflagetisches APÜ10, APÜ20, APA10, APA20. Diese (erste) Verspannung kann bis zum Abschluss der Ermittlung S4/S5 aufrecht erhalten bleiben.

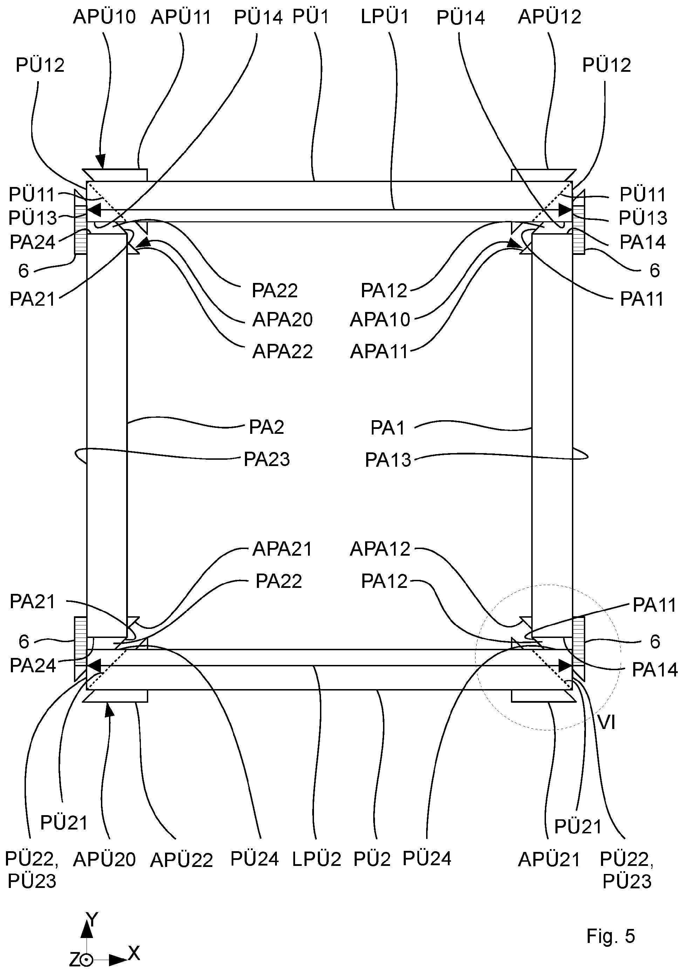

In Schritt S4 erfolgt ein (erstes) Ermitteln zumindest eines ersten Längenwertes und Positionswertes anhand der Kunststoffprofilstäbe PÜ1, PÜ2, PA1, PA2. Die **Figuren 5** **und** **6** zeigen, dass die Kunststoffprofilstäbe PÜ1, PÜ2, PA1, PA2 hierzu so verstellt werden, dass die Überschlagstirnseiten PÜ13, PÜ23 der Kunststoffprofilstäbe PÜ1, PÜ2 des ersten Paars gegen die Außenanschläge 6 derjenigen Auflageplatten APA11, APA12, APA21, APA22 kontaktierend verstellt werden, auf denen die Kunststoffprofilstäbe PA1, PA2 des zweiten Paars aufliegen. Dies erfolgt durch Verstellung entlang der Bewegungsrichtungen APA11X, APA12X, APA21X, APA22X. Außenumfangsseitig fluchten die Überschläge PÜ12, PÜ22 mit den Ausklinkungen PA12, PA22. Das (erste) Ermitteln S4 dient zweierlei. Erstens sind dadurch die Stablängen LPÜ1, LPÜ2 der beiden Kunststoffprofilstäbe PÜ1, PÜ2 des ersten Paars zwischen den jeweiligen Überschlagstirnseiten PÜ13, PÜ23 in Längsrichtung des Kunststoffprofilstabs PÜ1, PÜ2 bekannt. Die Stablängen LPÜ1, LPÜ2 sind Längenwerte. Diese beiden Maße sind IST-Maße, die dem Verstellen in Schritt S7 dienen. Zweitens werden dadurch Positionswerte der Auflageplatten APA11, APA12, APA21, APA22 und der Auflagetische APA10, APA20 jeweils des zweiten Paars von Kunststoffprofilstäben PA1, PA2 bekannt, auf welchen die Verschweißpositionen basieren können. Die Positionswerte sind Längenwerte. Die Positionswerte können mittels Messsystem der Maschine erfasst werden. Im vorliegenden Fall können die Auflageplatten APA11, APA12, APA21, APA22 oder Auflagetische APA10, APA20 beim Gegeneinanderdrücken in Schritt S12 auf diese Position oder X-Position verfahren werden. Dadurch stehen die Überschläge PÜ12, PÜ22 nach dem Gegeneinanderdrücken S12 weder über die Außenumfangsseiten PA13, PA23 hinaus noch diesbezüglich zurück.

Die größere der beiden Stablängen LPÜ1, LPÜ2 kann die Verschweißpositionen der betroffenen Auflagetische APA10, APA20 und/oder Auflageplatten APA11, APA12, APA21, APA22 des anderen Kunststoffprofilstabs vorgeben. Stehen beispielsweise die Auflageplatten APA11 und APA22 am Kunststoffprofilstab PÜ1 weiter auseinander als die Auflageplatten APA11 und APA22 am gegenüberliegenden Kunststoffprofilstab PÜ2, so geben die erstgenannten Auflageplatten APA11 und APA22 die Verschweißpositionen für die letztgenannten Auflageplatten APA11 und APA22 vor. Das (erste) Ermitteln erfolgt während beabstandeter benachbarter Gehrungsflächen PÜ11, PÜ21, PA11, PA21.

Im Anschluss an Schritt S4 kann eine Prüfung erfolgen. Wobei die ersten Längenwerte bzw. Stablängen LPÜ1 und LPÜ2 miteinander und/oder mit einem Grenzwert verglichen werden können.

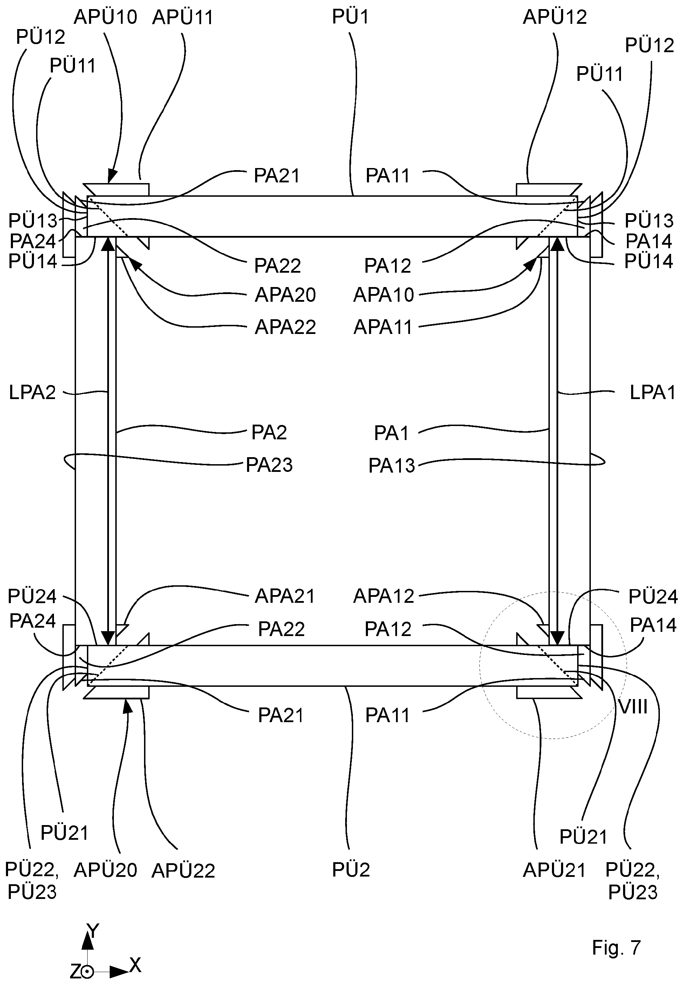

In Schritt S5 erfolgt ein (zweites) Ermitteln zumindest eines zweiten Längenwertes und Positionswertes anhand der Kunststoffprofilstäbe PÜ1, PÜ2, PA1, PA2. Die **Figuren 7** **und** **8** zeigen, dass die Kunststoffprofilstäbe PÜ1, PÜ2, PA1, PA2 hierzu so verstellt werden, dass die Überschlaglängsseiten PÜ14, PÜ14 der Kunststoffprofilstäbe PÜ1, PÜ2 des ersten Paars gegen die jeweils benachbarte Ausklinkungsstirnseite PA14, PA24 der Kunststoffprofilstäbe PA1, PA2 des zweiten Paars kontaktierend verstellt werden. Die Überschläge PÜ12, PÜ22 schlagen an den Ausklinkungen PA12, PA22 an. Dies erfolgt durch Verstellung entlang der Bewegungsrichtungen APÜ11Y, APÜ12Y, APÜ21Y, APÜ22Y. Das (zweite) Ermitteln S5 dient zweierlei. Erstens sind dadurch die Stablängen LPA1, LPA2 der beiden Kunststoffprofilstäbe PA1, PA2 des zweiten Paars zwischen den jeweiligen Ausklinkungsstirnseiten PA14, PA24 bekannt. Die Stablängen LPA1, LPA2 sind Längenwerte. Diese beiden Maße sind IST-Maße, die dem Verstellen in Schritt S7 dienen. Zweitens werden dadurch Positionswerte der Auflageplatten APÜ11, APÜ12, APÜ21, APÜ22 und der Auflagetische APÜ10, APÜ20 jeweils des ersten Paars von Kunststoffprofilstäben PÜ1, PÜ2 bekannt, auf welchen die Verschweißpositionen basieren können. Die Positionswerte sind Längenwerte. Die Positionswerte können mittels Messsystem der Maschine erfasst werden. Im vorliegenden Fall können die Auflageplatten APÜ11, APÜ12, APÜ21, APÜ22 oder Auflagetische APÜ10, APÜ20 beim Gegeneinanderdrücken in Schritt S12 auf diese Position oder Y-Position verfahren werden. Dadurch liegen die Überschlaglängsseiten PÜ14, PÜ14 an den benachbarten Ausklinkungsstirnseite PA14, PA24 so an, dass nach dem Gegeneinanderdrücken S12 weder sichtseitige Lücken bleiben noch Spannungen erzeugt werden.

Die größere der beiden Stablängen LPA1, LPA2 kann die Verschweißpositionen der betroffenen Auflagetische APÜ10, APÜ20 und/oder Auflageplatten APÜ11, APÜ12, APÜ21, APÜ22 des anderen Kunststoffprofilstabs vorgeben. Stehen beispielsweise die Auflageplatten APÜ11 und APÜ22 am Kunststoffprofilstab PA1 weiter auseinander als die Auflageplatten APÜ11 und APÜ22 am gegenüberliegenden Kunststoffprofilstab PA2, so geben die erstgenannten Auflageplatten APÜ11 und APÜ22 die Verschweißpositionen für die letztgenannten Auflageplatten APÜ11 und APÜ22 vor. Das (zweite) Ermitteln erfolgt während beabstandeter benachbarter Gehrungsflächen PÜ11, PÜ21, PA11, PA21.

Im Anschluss an Schritt S5 kann eine Prüfung erfolgen. Wobei die zweiten Längenwerte bzw. Stablängen LPA1 und LPA2 miteinander und/oder mit einem Grenzwert verglichen werden können.

In Schritt S6 erfolgt ein (erstes) Entspannen aller Kunststoffprofilstäbe PÜ1, PÜ2, PA1, PA2.

In Schritt S7 erfolgt ein Verstellen der Schweißköpfe K1, K2, K3, K4 aus der Initialanordnung in die Korrekturanordnung auf Basis der ersten Längenwerte und zweiten Längenwerte. Im vorliegenden Beispiel können dies die Stablängen LPA1, LPA2, LPÜ1, LPÜ 2 sein.

Denkbar ist, dass einer oder beide in der ersten Ermittlung S4 ermittelten Längenwerte bzw. Stablängen LPÜ1 und LPÜ2 größer ist/sind als ein SOLL-Maß/Grenzwert in dieser Raumrichtung, hier der X-Richtung. Sodann können die zwei benachbarten Schweißköpfe K2 und K4 in dieser Raumrichtung (hier: X-Richtung) so verstellt werden, dass sie bezüglich der anderen beiden Schweißköpfe K1 und K3 distanzierter sind.

Denkbar ist, dass einer oder beide in der zweiten Ermittlung S5 ermittelten Längenwerte bzw. Stablängen LPA1 und LPA2 kleiner ist/sind als ein SOLL-Maß/Grenzwert in dieser Raumrichtung, hier der Y-Richtung. Sodann können die zwei benachbarten Schweißköpfe K1 und K2 in dieser Raumrichtung (hier: Y-Richtung) so verstellt werden, dass sie bezüglich der anderen beiden Schweißköpfe K3 und K4 angenähert sind.

In Schritt S8 erfolgt ein Ausrichten der Kunststoffprofilstäbe PÜ1, PÜ2, PA1, PA2 an Justieranschlägen J1, J2, J3, J4. Die Justieranschläge J1, J2, J3, J4 können hierzu in den Zwischenraum benachbarter Gehrungsfläche PÜ11, PÜ21, PA11, PA21 eingefahren werden. Die Kunststoffprofilstäbe können sodann gegen die Justieranschläge angestellt werden und zentrieren sich daher selbst daran.

In Schritt S9 erfolgt ein (zweites) Verspannen der Kunststoffprofilstäbe PÜ1, PÜ2, PA1, PA2 mittels der Spannmittel. Die Kunststoffprofilstäbe PÜ1, PÜ2, PA1, PA2 sind dann ortsfest gehalten bezüglich ihrer jeweiligen Auflageplatten APA11, APA12, APA21, APA22, APÜ11, APÜ12, APÜ21, APÜ22 / des jeweiligen Auflagetisches APÜ10, APÜ20, APA10, APA20. Diese (zweite) Verspannung kann bis zum Abschluss des Gegeneinanderdrückens S12 aufrecht erhalten bleiben.

Denkbar ist, dass sich die Schritte S8 und S9 für jedes Paar von Kunststoffprofilstäben PÜ1, PÜ2, PA1, PA2 an widerholen und das Ausrichten und (zweite) Verspannen somit paarweise erfolgt. Denkbar ist nämlich, dass erst ein Paar von Kunststoffprofilstäben PÜ1, PÜ2, PA1, PA2 ausgerichtet wird (S8) und danach deren (zweite) Verspannung (S9) erfolgt, woraufhin dann das andere Paar von Kunststoffprofilstäben PÜ1, PÜ2, PA1, PA2 ausgerichtet wird (S8) und danach deren (zweite) Verspannung (S9) erfolgt.

In Schritt S10 kann eine materialentfernende und/oder ablängende Bearbeitung der Gehrungsflächen PÜ11, PÜ21, PA11, PA21 erfolgen, beispielsweise mittels Fräsen. Denkbar ist, dass das Bearbeiten in S10 und das Erhitzen in S11 wiederholt oder mehrfach wird.

In Schritt S11 erfolgt ein Erhitzen der Gehrungsflächen PÜ11, PÜ21, PA11, PA21 und ein Plastifizieren der Enden der Kunststoffprofilstäbe PÜ1, PÜ2, PA1, PA2 zu deren Verschmelzung.

In Schritt S12 erfolgt ein Gegeneinanderdrücken der Kunststoffprofilstäbe PÜ1, PÜ2, PA1, PA2. Hierbei werden die Auflageplatten APA11, APA12, APA21, APA22, APÜ11, APÜ12, APÜ21, APÜ22 und/oder Auflagetische APÜ10, APÜ20, APA10, APA20 in ihre jeweilige Verschweißposition gefahren. Diese Verschweißpositionen sind bekannt aus den Schritten S4 und S5 in denen die Kunststoffprofilstäbe PÜ1, PÜ2, PA1, PA2 auf die maßlich unveränderlichen Abschnitte verstellt werden. Auf der Sichtseite oder Hauptfläche des Rahmens 2 stoßen die Kunststoffprofilstäbe PÜ1, PÜ2, PA1, PA2 stumpf und unverschweißt aneinander an. Die Sichtseite oder Hauptfläche des Rahmens 2 ist vollständig aus rechtwinkligen Flächen gebildet.

In Schritt S13 kann nach dem Gegeneinanderdrücken S12 kann ein (zweites) Entspannen erfolgen und ein Entnehmen des gefertigten Rahmens 2 erfolgen.

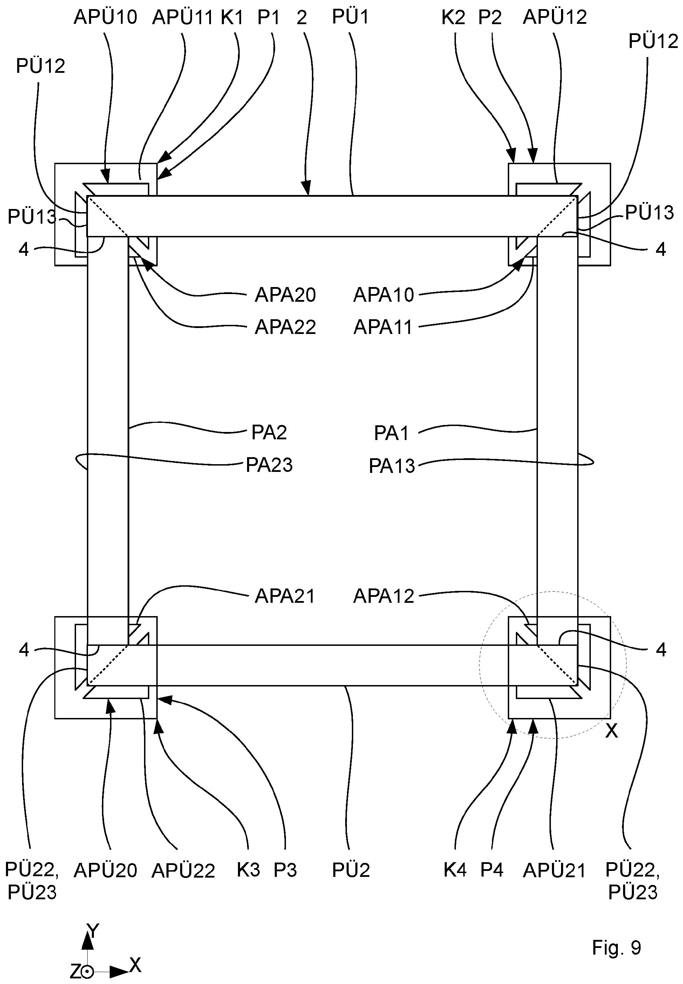

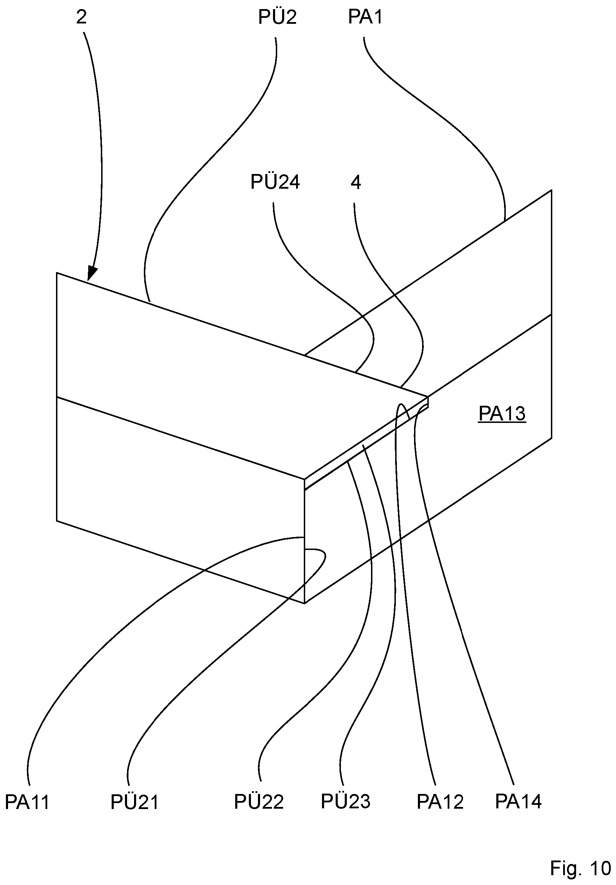

In den **Figuren 9** **und** **10** ist der gefertigte Rahmen 2 gezeigt, wobei die Schweißstellen in Figur 9 lediglich aus illustratorischen Gründen gezeigt sind (strichliert). Figur 10 zeigt eine Ecke des Rahmens 2, in der ein Überschlag PÜ22 formpassend in die Ausklinkung PA12 eingreift und die darunterliegende Schweißstelle sichtverdeckt.

Die Erfindung ist nicht auf eine der vorbeschriebenen Ausführungsformen beschränkt, sondern in vielfältiger Weise abwandelbar. Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

In den Rahmen der Erfindung fallen sämtliche Kombinationen aus zumindest zwei von den in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

**Bezugszeichenliste**

| | | | |
|---|---|---|---|
| 1 | Maschine | PÜ2 | zweiter Kunststoffprofilstab |
| 2 | Rahmen | PÜ21 | Gehrungsfläche |
| 4 | Stumpfstoß | PÜ22 | Überschlag |
| 6 | Außenanschlag | PÜ23 | Überschlagstirnseite |
| | | PÜ24 | Überschlaglängsseite |
| APA10 | Auflagetisch | | |
| APA11 | Auflageplatte | PA1 | erster Kunststoffprofilstab |
| APA12 | Auflageplatte | PA11 | Gehrungsfläche |
| APA20 | Auflagetisch | PA12 | Ausklinkung |
| APA21 | Auflageplatte | PA13 | Außenumfangsseite |
| APA22 | Auflageplatte | PA14 | Ausklinkungsstirnseite |
| APÜ10 | Auflagetisch | | |
| APÜ11 | Auflageplatte | PA2 | zweiter Kunststoffprofilstab |
| APÜ12 | Auflageplatte | PA21 | Gehrungsfläche |
| APÜ20 | Auflagetisch | PA22 | Ausklinkung |
| APÜ21 | Auflageplatte | PA23 | Außenumfangsseite |
| APÜ22 | Auflageplatte | PA24 | Ausklinkungsstirnseite |
| | | | |
| H1 | Heizspiegel | S1 | Verfahrensschritt Ablängen |
| H2 | Heizspiegel | S2 | Verfahrensschritt Einlegen |
| H3 | Heizspiegel | S3 | Verfahrensschritt (erstes) Verspannen |
| H4 | Heizspiegel | S4 | Verfahrensschritt (erstes) Ermitteln |
| | | S5 | Verfahrensschritt (zweites) Ermitteln |
| J1 | Justieranschlag | S6 | Verfahrensschritt (erstes) Entspannen |
| J2 | Justieranschlag | S7 | Verfahrensschritt Verstellen |
| J3 | Justieranschlag | S8 | Verfahrensschritt Ausrichten |
| J4 | Justieranschlag | S9 | Verfahrensschritt (zweites) Verspannen |
| | | S10 | Verfahrensschritt Bearbeiten |
| K1 | Schweißkopf | S11 | Verfahrensschritt Erhitzen |
| K1Y | Bewegungsrichtung | S12 | Verfahrensschritt Gegeneinanderdrücken |
| K2 | Schweißkopf | S13 | Verfahrensschritt (zweites) Entspannen |
| K2X | Bewegungsrichtung | | |
| K2Y | Bewegungsrichtung | | |
| K3 | Schweißkopf | | |
| K4 | Schweißkopf | | |
| K4X | Bewegungsrichtung | | |
| | | | |
| LPA1 | Stablänge | | |
| LPA2 | Stablänge | | |
| LPÜ1 | Stablänge | | |
| LPÜ2 | Stablänge | | |
| | | | |
| PÜ1 | erster Kunststoffprofilstab | | |
| PÜ11 | Gehrungsfläche | | |
| PÜ12 | Überschlag | | |
| PÜ13 | Überschlagstirnseite | | |
| PÜ14 | Überschlaglängsseite | | |

## Patentansprüche

1. Verfahren zum Verschweißen von vier Kunststoffprofilstäben (PÜ1, PÜ2, PA1, PA2) zu einem Rahmen (2) mit sichtflächigen Stumpfstößen (4) unter Verwendung einer Maschine (1) mit vier Schweißköpfen (K1, K2, K3, K4), umfassend die folgenden Schritte:
- Einlegen eines ersten Paars von Kunststoffprofilstäben (PÜ1, PÜ2) in die Maschine (1), wobei in der Maschine jeder Kunststoffprofilstab (PÜ1, PÜ2) des ersten Paars endseitige Gehrungsflächen (PÜ11, PÜ21) und endseitige Überschläge (PÜ12, PÜ22) aufweist, wobei jeder Überschlag (PÜ12, PÜ22) eine endseitige Überschlagstirnseite (PÜ13, PÜ23) und eine Überschlaglängsseite (PÜ14, PÜ24) aufweist,
- Einlegen eines zweiten Paars von Kunststoffprofilstäben (PA1, PA2) in die Maschine (1), wobei in der Maschine jeder Kunststoffprofilstab (PA1, PA2) des zweiten Paars endseitige Gehrungsflächen (PA11, PA21) und endseitige Ausklinkungen (PA12, PA22) aufweist, wobei jeder Kunststoffprofilstab (PA1, PA2) des zweiten Paars eine Außenumfangsseite (PA13, PA23) und eine Ausklinkungsstirnseite (PA14, PA24) aufweist,
- Ermitteln zumindest eines ersten Längenwertes anhand der Kunststoffprofilstäbe (PÜ1, PÜ2, PA1, PA2),
- Ermitteln zumindest eines zweiten Längenwertes anhand der Kunststoffprofilstäbe (PÜ1, PÜ2, PA1, PA2),
- Verstellen zumindest eines Schweißkopfes (K1, K2, K3, K4) auf Basis des zumindest einen ersten Längenwertes und des zumindest einen zweiten Längenwertes,
- Erhitzen der Gehrungsflächen (PÜ11, PÜ21, PA11, PA21),
- Gegeneinanderdrücken der Gehrungsflächen (PÜ11, PÜ21, PA11, PA21).

2. Verfahren nach Anspruch 1, **dadurch gekennzeichnet, dass** das Ermitteln des zumindest einen ersten Längenwertes den Unterschritt umfasst:
- Ermitteln der Stablänge (LPÜ1, LPÜ2) jedes Kunststoffprofilstabs (PÜ1, PÜ2) des ersten Paars zwischen seinen Überschlagstirnseiten (PÜ13, PÜ23).

3. Verfahren nach Anspruch 2, **dadurch gekennzeichnet, dass** das Ermitteln des zumindest einen ersten Längenwertes den Unterschritt umfasst:
- Verstellen von Außenanschlägen (6) gegen die jeweils benachbarte Überschlagstirnseite (PÜ13, PÜ23).

4. Verfahren nach einem der voranstehenden Ansprüche, **dadurch gekennzeichnet, dass** das Ermitteln des zumindest einen zweiten Längenwertes den Unterschritt umfasst:
- Ermitteln der Stablänge (LPA1, LPA2) jedes Kunststoffprofilstabs (PA1, PA2) des zweiten Paars zwischen seinen Ausklinkungsstirnseiten (PA14, PA24).

5. Verfahren nach Anspruch 4, **dadurch gekennzeichnet, dass** das Ermitteln des zumindest einen zweiten Längenwertes den Unterschritt umfasst:
- Verstellen der Überschlaglängsseiten (PÜ14, PÜ24) gegen die jeweils benachbarte Ausklinkungsstirnseite (PA14, PA24).

6. Verfahren nach einem der voranstehenden Ansprüche, **dadurch gekennzeichnet, dass** das Ermitteln des zumindest einen ersten Längenwertes und/oder des zumindest einen zweiten Längenwertes während beabstandeter benachbarter Gehrungsflächen (PÜ11, PÜ21, PA11, PA21) erfolgt.

7. Verfahren nach einem der voranstehenden Ansprüche, **dadurch gekennzeichnet, dass** das Ermitteln des zumindest einen ersten Längenwertes und/oder des zumindest einen zweiten Längenwertes erfolgt anhand der Position von
- Auflageplatten (APA11, APA12, APA21, APA22, APÜ11, APÜ12, APÜ21, APÜ22) der Maschine (1), auf denen die Kunststoffprofilstäbe (PÜ1, PÜ2, PA1, PA2) aufliegen, und/oder
- Auflagetischen (APA10, APA20, APÜ10, APÜ20) der Maschine (1), auf denen die Kunststoffprofilstäbe (PÜ1, PÜ2, PA1, PA2) aufliegen, und/oder
- Schweißköpfen (K1, K2, K3, K4) der Maschine (1).

8. Verfahren nach einem der voranstehenden Ansprüche, **gekennzeichnet durch** den Verfahrensschritt
- Ausrichten der Kunststoffprofilstäbe (PÜ1, PÜ2, PA1, PA2) an Justieranschlägen (J1, J2, J3, J4), vorzugsweise vor und/oder nach dem Ermitteln der Längenwerte.

9. Verfahren nach einem der voranstehenden Ansprüche, **dadurch gekennzeichnet, dass**
das Gegeneinanderdrücken derart erfolgt, dass
- Auflageplatten (APA11, APA12, APA21, APA22, APÜ11, APÜ12, APÜ21, APÜ22) der Maschine (1), auf denen die Kunststoffprofilstäbe (PÜ1, PÜ2, PA1, PA2) aufliegen, und/oder
- Auflagetische (APA10, APA20, APÜ10, APÜ20) der Maschine (1), auf denen die Kunststoffprofilstäbe (PÜ1, PÜ2, PA1, PA2) aufliegen,
auf eine jeweilige Verschweißposition (P1, P2, P3, P4) verfahren werden.

10. Verfahren nach einem der voranstehenden Ansprüche, **dadurch gekennzeichnet, dass** nach dem Einlegen der Kunststoffprofilstäbe (PÜ1, PÜ2, PA1, PA2) und dem Gegeneinanderdrücken in der Maschine (1) entweder keine materialentfernende und/oder ablängende Bearbeitung der Kunststoffprofilstäbe (PÜ1, PÜ2, PA1, PA2) erfolgt oder eine materialentfernende und/oder ablängende Bearbeitung der Gehrungsflächen (PÜ11, PÜ21, PA11, PA21) erfolgt.
